# EUROPÄISCHE PATENTSCHRIFT

(11) **EP 1 958 757 B1**
(45) Veröffentlichungstag und Bekanntmachung des Hinweises auf die Patenterteilung: **07.03.2012**
(21) Anmeldenummer: 08000418.7
(22) Anmeldetag: 10.01.2008
(51) Int. Cl.: B29C 47/50, F04C 3/04, F04C 11/00

(54) **Extruder**
Extruder
Extrudeuse

(30) Priorität: 16.02.2007 DE 102007007824
(43) Veröffentlichungstag der Anmeldung: 20.08.2008
(73) Patentinhaber: VMI - AZ Extrusion GmbH, 93486 Runding (DE)
(72) Erfinder: Uphus, Reinhard, 30419 Hannover (DE)
(74) Vertreter: Baronetzky, Klaus

(56) Entgegenhaltungen:
- EP-A1- 1 731 764
- DE-A1- 3 925 202
- US-A- 4 642 040

## Beschreibung

Die Erfindung betrifft einen Extruder für viskose Massen, insbesondere Thermoplastschmelzen und natürliche oder synthetische Kautschukmischungen mit einer Extruderschnecke, an die sich in Förderrichtung stromab eine Zahnradverdrängerpumpe mit mindestens einem Förderrad und mindestes einem Verdrängerrad anschließt.

Aus der US 4 642 040 A ist ein Extruder für viskose Massen mit einer Zahnradpumpe bekannt, gemäß dem Oberbegriff des Anspruchs 1.

Bei derartigen Extrudern ist bekannt, stromab in Förderrichtung hinter der Extruderschnecke eine Zahnradpumpe, im Allgemeinen mit zwei Rotoren, anzuordnen. Die Zahnradpumpe erfordert einen gesonderten Antrieb und ist an das Gehäuse der Extruderschnecke angeflanscht, wobei sich konstruktionsbedingt Verengungen an dem Übergang zwischen den beiden Gehäusen vergeben können.

Zahnradpumpen sind geeignet, hohe Druckgradienten aufzubauen. Sie arbeiten nach dem volumetrischen Förderprinzip, indem die Zahnhohlräume abgeschlossene Kammern bilden. Der Ausstoß ist nahezu unabhängig von Gegendruck und proportional zu der Drehzahl. Die Zahnradpumpe dämpft und vergleichmäßigt die durch die Schneckengeometrie erzeugten Druckpulsationen bis zu einem Faktor 10 mit der Folge, in gleichem Verhältnis verbesserten Gewichts- und Dimensionstoleranzen. Zudem ist der Wirkungsgrad einer Zahnradpumpe deutlich besser, so dass die zu fördernde Masse eine geringe Temperatur aufweisen kann.

Bei bekannten Extruderanordnungen ist die Zahnradpumpe nach Art eines Planetengetriebes ausgebildet, wobei die Achsen des Sonnenrads, des Außenrings, des Planetenträgers und aller Planetenräder parallel zu einander und zur Achse der Extruderschnecke angeordnet sind.

Bei Planetenradgetriebepumpen besteht jedoch der Nachteil, dass der Einfülldruck bedingt durch die Zuführöffnung und die Stromumleitung relativ hoch ist.

Der vorliegenden Erfindung liegt deshalb die Aufgabe zugrunde, den Einfülldruck an der Zahnradpumpe zu senken.

Zur Lösung dieser Aufgabe wird erfindungsgemäß vorgeschlagen, dass die Achse des Förderrads im Wesentlichen rechtwinklig zu der Achse der Extruderschnecke und die Achse des Verdrängerrads im Wesentlichen in der gleichen Richtung wie die Achse der Extruderschnecke angeordnet sind, gemäß dem kennzeichnenden Teil des Anspruchs 1.

Hierdurch ergibt sich der verfahrenstechnische Vorteil, dass der Einfülldruck wesentlich geringer ist als bei den bekannten Planetenradzahnradpumpen, zumal die bei diesen jedem Planetenrad zugeordneten Stömungskanäle entfallen, was den Vorteil hat, dass durch den Schneckenextruder ein geringerer Druckaufbau erforderlich ist und damit die viskosen Massen weniger erwärmt werden.

Das Gehäuse der Zahnradpumpe ist nach einem weiteren Merkmal der Erfindung in das Gehäuse der Extruderschnecke integriert, wodurch ebenfalls Zuführöffnungen entfallen, so dass noch weniger Wärme und damit noch weniger dissipierte Energie entsteht.

Gemäß einem weiteren Merkmal der Erfindung ist ein gleichmäßiger Volumenstrom dadurch erreichbar, dass das Förderrad und das Verdrängerrad als mit einander kämmende Kegelräder ausgebildet sind.

Ein Schneckenextruder fördert aufgrund der Innenreibung und erzeugt eine Schleppströmung entlang der Extruderschnecke. Muss zusätzlich zur Förderung ein Druckgradient aufgebaut werden, wird dem Schleppvolumenstrom ein in die Gegenrichtung wirkender Druckvolumenstrom überlagert. Dies führt zu einer erhöhten dissipativen Erwärmung und zu einem Absenken des effektiv förderbaren Massestroms. Demgegenüber ist eine Zahnradverdrängerpumpe ein volumetrischer Förderer, so dass hier die Förderrate wesentlich weniger von dem Gegendruck abhängt. Die erfindungsgemäße Lösung erlaubt es daher, relativ druckunabhängig zu fördern, wobei durch die erfindungsgemäß ausgebildete Zahnradverdrängerpumpe eine niedrige Massetemperatur erzielbar ist.

Das Förderrad kann als Planrad und das Verdrängerrad als Kegelrad ausgebildet sein. Alternativ kann das Verdrängerrad als Planrad und das Förderrad als Kegelrad ausgebildet sein.

In beiden Fällen ist zweckmäßigerweise die Achse des Verdrängerrads unter einem rechten Winkel zu der Achse des Förderrads angeordnet.

Das Förderverhalten elastomerer Massen, wie Kautschukmischungen hängt stark von verschiedenen Parametern ab. Wenn aufgrund der vorliegenden Viskosität der Masse die Zahnradverdrängerpumpe stärker fördert als die Extruderschnecke, entsteht im Übergangsbereich ein Unterdruck. Dieser kann zur Bläschenbildung führen, so dass die Qualität der geförderten Masse nicht den Erfordernissen entspricht. Um dies auszuschließen, kann man zwar die Förderrate der Extruderschnecke vergrößern, dann entsteht jedoch für eine Mischung z.B. geringer Viskosität ein entsprechender Überdruck im Übergangsbereich, der die Konstruktion belastet und die Massetemperatur höher als nötig ansteigen lässt.

Um den Einfülldruck in die Pumpe bei unterschiedlichen Mischungen optimal zu gestalten, ist gemäß einem weiteren Merkmal der Erfindung vorgesehen, dass das Verdrängerrad einen von der Extruderschnecke unabhängigen Antrieb aufweist.

Die erfindungsgemäße Lösung gestattet deshalb mit einfachen Mitteln die Qualität des Extrudats gleich bleibend zu halten, auch wenn unterschiedliche Massen, wie einerseits synthetische Kaut-schukmischungen und andererseits Mischungen aus natürlichem Kautschuk eingesetzt werden.

Sollen durch den Extruder Viskosemassen nur in einem relativ begrenzten Viskositätsbereich verarbeitet und die Konstruktion vereinfacht werden, ist es gemäß einem weiteren Merkmal der Erfindung möglich, dass das Verdrängerrad und die Extruderschnecke kraftschlüssig verbunden sind. Damit erübrigt sich ein gesonderter Antrieb für das Verdrängerrad und/oder das Förderrad.

Alternativ kann das Förderrad den Antrieb aufweisen. Ein größeres Fördervolumen durch die Zahnradverdrängerpumpe ist dadurch erreichbar, dass auf der dem Förderrad gegenüberliegenden Seite der Extruderschnecke ein weiteres Förderrad angeordnet ist, das ebenfalls mit dem Verdrängerrad kämmt. Alternativ können auf dem Umfang der Extruderschnecke mehrere Förderräder angeordnet sein, die von einem oder mehreren Verdrängerrädern angetrieben werden.

Eine weitere Möglichkeit, das Fördervolumen der Zahnradverdrängerpumpe zu steigern, besteht darin, dass gemäß einem weiteren Merkmal der Erfindung die Extruderschnecke eine sich in den Bereich der Förderräder hinein ersteckende Verlängerung aufweist und auch die Zahnhohlräume des Verdrängerrads zwischen zwei kämmenden Verdrängerbereichen füllt, von denen aus der Massestrom zur Extrusionsdüse geführt ist.

Die Verlängerung kann bis an das Verdrängerrad herangeführt und auch mit diesem kraftschlüssig verbunden sein.

Es besteht auch die Möglichkeit, in einem vollständig geschlossenen Gehäuse der Zahnradverdrängerpumpe das Verdrängerrad ausschließlich durch eine Welle anzutreiben, die sich innerhalb einer koaxialen Bohrung durch die Extruderschnecke hindurch erstreckt.

In der Zeichnung sind Ausführungsbeispiele der Erfindung wiedergegeben, die anhand der nachfolgenden Beschreibung näher erläutert werden. Es zeigen:
- Fig. 1: den erfindungsgemäßen Extruder im Längsschnitt,
- Fig. 2:: ein weiteres Ausführungsbeispiel des erfindungsgemäßen Extruders im Längsschnitt.

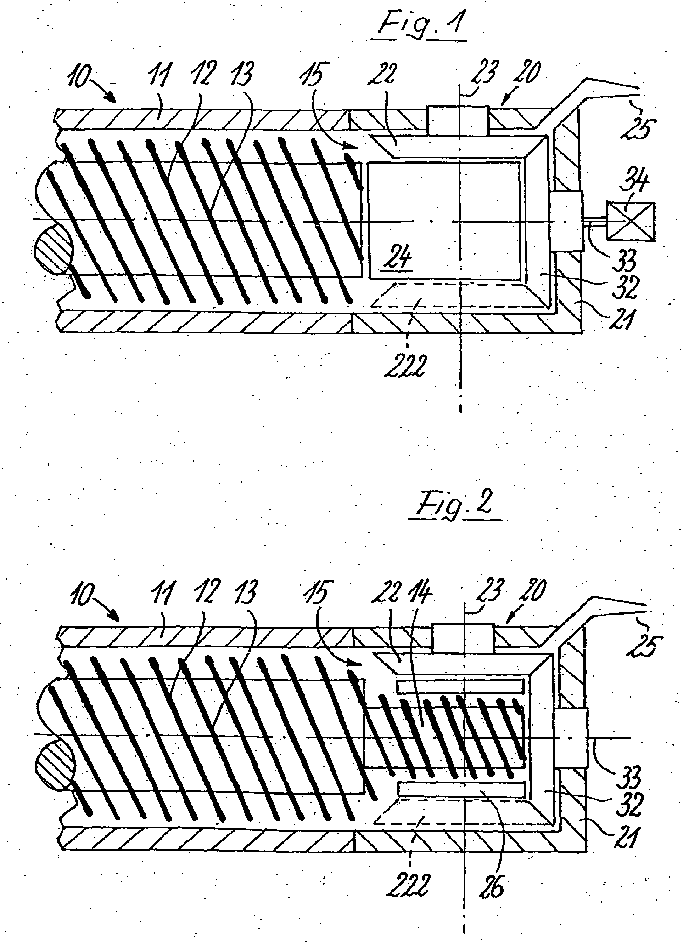

Fig. 1 zeigt schematisch im Längsschnitt einen Schneckenextruder 10 mit einem Extrudergehäuse 11 zur Aufnahme einer Extruderschnecke 12 herkömmlicher Bauart.

An das Extrudergehäuse 11 schließt sich eine Zahnradverdrängerpumpe 20 an, die in einem Gehäuse 21 angeordnet ist, das ebenfalls nur schematisch dargestellt ist.

Innerhalb des Gehäuses 21 ist ein Förderrad 22 angeordnet, das um eine Achse 23 drehbar gelagert ist.

Mit dem Förderrad 22 kämmt ein Verdrängerrad 32, das bei dem dargestellten Ausführungsbeispiel mit der Achse 13 der Extruderschnecke 12 koaxial angeordnet ist. Bei dem dargestellten Ausführungsbeispiel ist das Verdrängerrad 32 unabhängig von der Schnecke 12 drehbar, wobei die Achse 33 des Verdrängerrads 32 als Welle mit einem Verdrängeradantrieb 34 ausgelegt ist.

Bei dem in Fig. 1 dargestellten Ausführungsbeispiel reicht die Extruderschnecke 12 bis an einen Einsatz 24 innerhalb des Gehäuses 21 der Zahnradverdrängerpumpe 20.

Auf diese Weise entsteht ein Übergang 15 von dem Schneckenextruder 10 zu der Zahnradverdrängerpumpe 20, der einen relativ großen freien Querschnitt aufweist und eine gleichmäßige Beaufschlagung des Förderrads 22 gestattet.

Das Gehäuse 21 der Zahnradpumpe 20 ist gemäß einer bevorzugten Ausführungsform, wie etwa in Fig. 1 und 2 angedeutet, in das Gehäuse 11 der Extruderschnecke 12 integriert, wodurch konstruktionsbedingte Verengungen an dem Übergang zwischen den beiden Gehäuseabschnitten entfallen.

Die Achse 23 des Förderrads 22 ist im Wesentlichen rechtwinklig zu der Achse 13 der Extruderschnecke 12 angeordnet. Bei dem in Fig. 1 dargestellten Ausführungsbeispiel ist ein exakter rechter Winkel zwischen den Achsen 13 und 23 vorgesehen.

Aus dem Verdrängerbereich, in dem das Förderrad 22 mit dem Verdrängerrad 32 kämmt, wird die viskose Masse einer Extrusionsdüse 25 zugeführt.

In dem in Fig. 1 dargestellten Ausführungsbeispiel ist auf der dem Förderrad 22 gegenüberliegenden Seite der Extruderschnecke 12 ein weiteres Förderrad 222 angeordnet, das ebenfalls mit dem Verdrängerrad 32 kämmt. Auf dem Unfang der Extruderschnecke 12 können mehrere Förderräder 22, 222 angeordnet sein, die mit dem Verdrängerrad 32 kämmen. Aus dem jeweiligen Verdrängerbereich, in dem das Förderrad 22, 222 mit dem Verdrängerrad 32 kämmt, wird die viskose Masse über nicht dargestellte Kanäle innerhalb oder außerhalb des Gehäuses 21 der Zahnradverdrängerpumpe 20 der Extrusionsdüse 25 zugeführt.

Bei dem in Fig. 2 dargestellten Ausführungsbeispiel weist die Extruderschnecke 12 eine sich in den Bereich der Förderräder 22, 222 hinein erstreckende Verlängerung 14 auf.

Bei diesem Ausführungsbeispiel hat die Verlängerung 14 der Extruderschnecke 12 einen reduzierten Querschnitt und wird von einer Wandung 26 umschlossen, die zwischen der Verlängerung 14 und dem bzw. den Förderrädern 22, 222 innerhalb des Gehäuses 21 der Zahnradverdrängerpumpe 20 vorgesehen ist.

Die Verlängerung 14 kann sich bis an das Verdrängerrad 32 heran erstrecken und das Verdrängerrad 32 kann in diesem Bereich kraftschlüssig mit der Extruderschnecke 12 verbunden sein.

Bei den in Fig. 1 und 2 dargestellten Ausführungsbeispielen besteht die Möglichkeit, das bzw. die Förderräder 22, 222 als Planrad und das Verdängerrad 32 als Kegelrad auszubilden.

Alternativ können das Verdrängerrad 32 als Planrad und das bzw. die Förderräder 22, 222 als Kegelräder ausgebildet sein. In beiden Fällen ist die Achse des Verdrängerrads 32 unter einem rechten Winkel zur Achse 23 des Förderrads 22, 222 angeordnet.

Die Achse 33 des Verdrängerrads 32 kann auch unter einem spitzen Winkel zur Achse 23 des Förderrads 22 angeordnet sein.

Ebenso können das bzw. die Förderräder 22, 222 und das Verdrängerrad 32 als Schraubenräder ausgebildet sein.

Ferner besteht die Möglichkeit, dass das Verdrängerrad 32 als Schnecke und das bzw. die Förderräder 22, 222 als Schneckenräder ausgebildet sind.

Es besteht auch die Möglichkeit, mindestens eines der Förderräder 22, 222 mit einem unabhängigen Antrieb von außen vorzusehen.

In beiden Fällen sind Wartungsarbeiten beispielsweise auch beim Wechsel der viskosen Massen ohne größeren Aufwand und leichter als bekannten Zahnradpumpen durchzuführen.

Im Extrudergehäuse 11 können auch zwei Extruderschnecken 12 parallel zu einander angeordnet sein und gleichzeitig mit den jeweiligen Masseströmen die Zahnradverdrängerpumpe 20 beaufschlagen.

Die beiden Extruderschnecken 12 können auch in Richtung der Zahnradverdrängerpumpe 20 konvergierend angeordnet sein.

Ebenso können außermittig ein oder zwei Zahnradverdrängerritzel mit einem Förderplanrad kämmen. Mindestens eines von diesen kann unmittelbar oder über ein Zwischengetriebe von der oder den Extruderschnecken angetrieben sein.

### Bezugszeichenliste

- +10: Schneckenextruder
- 11: Extrudergehäuse
- 12: Extruderschnecke
- 13: Achse der Extruderschnecke
- 14: Verlängerung
- 15: Übergangsbereich

- 20: Zahnradverdrängerpumpe
- 21: Gehäuse der Zahnradverdrängerpumpe
- 22: Förderrad
- 222: Förderrad
- 23: Achse des Förderrads

- 25: Extrusionsdüse
- 26: Wandung

- 32: Verdrängerrad
- 33: Achse des Verdrängerrads
- 34: Verdrängerradantrieb

## Patentansprüche

1. Extruder für viskose Massen, insbesondere Thermoplastschmelzen und natürliche oder synthetische Kautschukmischungen mit einer Extruderschnecke, an die sich in Förderrichtung stromab eine Zahnradverdrängerpumpe mit mindestens einem Förderrad und mindestes einem Verdrängerrad abschließt, **dadurch gekennzeichnet, dass** die Achse (23) des Förderrads (22) im Wesentlichen rechtwinklig zu der Achse (13) der Extruderschnecke (12) und die Achse (33) des Verdrängerrads (32) im Wesentlichen in der gleichen Richtung wie die Achse (13) der Extruderschnecke (12) angeordnet sind.

2. Extruder nach Anspruch 1, **dadurch gekennzeichnet, dass** das Förderrad (22) und das Verdrängerrad (32) als mit einander kämmende Kegelräder ausgebildet sind.

3. Extruder nach Anspruch 1, **dadurch gekennzeichnet, dass** das Förderrad (22) oder das Verdrängerrad (32) als Planrad und das Verdrängerrad (32) oder das Förderrad (22) als Kegelrad ausgebildet sind.

4. Extruder nach mindestens einem der Ansprüche 1 bis 3, **dadurch gekennzeichnet, dass** die Achse (33) des Verdrängrads (32) unter einem rechten Winkel zu der Achse (23) des Förderrads (22) angeordnet ist.

5. Extruder nach mindestens einem der Ansprüche 1 bis 3, **dadurch gekennzeichnet, dass** die Achse (33) des Verdrängerrads (32) unter einem spitzen Winkel zu der Achse (23) des Förderrads (22) angeordnet ist.

6. Extruder nach mindestens einem der Ansprüche 1 bis 3, **dadurch gekennzeichnet, dass** das Förderrad (22) und das Verdrängerrad (32) als Schraubenräder ausgebildet sind.

7. Extruder nach Anspruch 6, **dadurch gekennzeichnet, dass** das Verdrängerrad (32) als Schnecke und das Förderrad (22) als Schneckenrad ausgebildet sind.

8. Extruder nach mindestens einem der Ansprüche 1 bis 7, **dadurch gekennzeichnet, dass** das Verdrängerrad (32) und die Extruderschnecke (12) koaxial angeordnet sind.

9. Extruder nach mindestens einem der Ansprüche 1 bis 8, **dadurch gekennzeichnet, dass** das Verdrängerrad (32) mit der Extruderschnecke (12) kraftschlüssig verbunden ist.

10. Extruder nach mindestens einem der Ansprüche 1 bis 8, **dadurch gekennzeichnet, dass** das Verdrängerrad (32) einen von der Extruderschnecke (12) unabhängigen Antrieb aufweist.

11. Extruder nach mindestens einem der Ansprüche 1 bis 10, **dadurch gekennzeichnet, dass** auf der dem Förderrad (22) gegenüber liegenden Seite der Extruderschnecke (12) ein weiteres Förderrad (222) angeordnet ist, das ebenfalls mit dem Verdrängerrad (32) kämmt.

12. Extruder nach mindestens einem der Ansprüche 1 bis 10, **dadurch gekennzeichnet, dass** auf dem Umfang der Extruderschnecke (12) mehrere Förderräder (22, 222) angeordnet sind.

13. Extruder nach mindestens einem der Ansprüche 1 bis 12, **dadurch gekennzeichnet, dass** die Extruderschnecke (12) eine sich in den Bereich der Förderräder (22, 222) hineinerstreckende Verlängerung (14) aufweist.

14. Extruder nach Anspruch 13, **dadurch gekennzeichnet, dass** sich die Verlängerung (14) bis an das Verdrängerrad (32) erstreckt.

15. Extruder nach mindestens einem der Ansprüche 1 bis 14, **dadurch gekennzeichnet, dass** zwei Extruderschnecken (12) parallel zu einander im Extrudergehäuse (11) angeordnet sind und gleichzeitig mit den jeweiligen Masseströmen die Zahnradverdrängerpumpe (20) beaufschlagen.

16. Extruder nach mindestens einem der Ansprüche 1 bis 14, **dadurch gekennzeichnet, dass** zwei Extruderschnecken (12) in Richtung der Zahnradverdrängerpumpe (20) konvergierend im Extrudergehäuse (11) angeordnet sind und gleichzeitig mit den jeweiligen Masseströmen die Zahnradverdrängerpumpe (20) beaufschlagen.

17. Extruder nach Anspruch 15 oder 16, **dadurch gekennzeichnet, dass** den beiden Extruderschnecken (12) außermittig ein oder zwei Zahnradverdrängerritzel zugeordnet sind, die mit einem Förderplanrad kämmen.

18. Extruder nach Anspruch 17, **dadurch gekennzeichnet, dass** mindestens eines der Zahnradverdrängerritzel unmittelbar oder über ein Zwischengetriebe von einer oder beiden Extruderschnecken (12) angetrieben ist und mit dem Förderplanrad kämmt.

19. Extruder nach mindestens einem der Ansprüche 1 bis 18, **dadurch gekennzeichnet, dass** das Gehäuse (21) der Zahnradverdrängerpumpe (20) in das Extrudergehäuse (11) integriert ist.

## Claims

1. An extruder for viscous compounds, in particular for thermoplastic melts and natural or synthetic rubber mixtures, said extruder comprising an extruder screw that is followed by a gear displacement pump having at least one transport wheel and at least one displacement wheel, **characterized in that** the axis (23) of the transport wheel (22) is substantially arranged perpendicular to the axis (13) of the extruder screw (12) and the axis (33) of the displacement wheel (32) is substantially arranged in the same direction as the axis (13) of the extruder screw (12).

2. The extruder according to claim 1, **characterized in that** the transport wheel (22) and the displacement wheel (32) are formed as bevel gears meshing with each other.

3. The extruder according to claim 1, **characterized in that** the transport wheel (22) or the displacement wheel (32) is formed as a crown gear and the displacement wheel (32) or the transport wheel (22) is formed as a bevel gear.

4. The extruder according to at least one of the claims 1 to 3, **characterized in that** the axis (33) of the displacement wheel (32) is arranged perpendicular to the axis (23) of the transport wheel (22).

5. The extruder according to at least one of the claims 1 to 3, **characterized in that** the axis (33) of the displacement wheel (32) is arranged at an acute angle relative to the axis (23) of the transport wheel (22).

6. The extruder according to at least one of the claims 1 to 3, **characterized in that** the transport wheel (22) and the displacement wheel (32) are configured as helical gears or wheels.

7. The extruder according to claim 6, **characterized in that** the displacement wheel (32) is configured as a screw or worm and that the transport wheel (22) is configured as a worm gear.

8. The extruder according to at least one of the claims 1 to 7, **characterized in that** the displacement wheel (32) and the extruder screw (12) are arranged coaxially relative to one another.

9. The extruder according to at least one of the claims 1 to 8, **characterized in that** the displacement wheel (32) is connected with the extruder screw (12) in a force-locking manner.

10. The extruder according to at least one of the claims 1 to 8, **characterized in that** the displacement wheel (32) comprises a drive that is independent of the extruder screw (12).

11. The extruder according to at least one of the claims 1 to 10, **characterized in that** on the side of the extruder screw (12) that is opposite to the transport wheel (22), a further transport wheel (222) is arranged that also meshes with the displacement wheel (32).

12. The extruder according to at least one of the claims 1 to 10, **characterized in that** several transport wheels (22, 222) are arranged on the periphery of the extruder screw (12).

13. The extruder according to at least one of the claims 1 to 12, **characterized in that** the extruder screw (12) comprises an extension or projection (14) that extends into the area of the transport wheels (22, 222).

14. The extruder according to claim 13, **characterized in that** the extension or projection (14) extends up to the displacement wheel (32).

15. The extruder according to at least one of the claims 1 to 14, **characterized in that** two extruder screws (12) are arranged in parallel to one another in the extruder housing (11), and simultaneously impinge on the gear displacement pump (20) with the respective mass flows.

16. The extruder according to at least one of the claims 1 to 14, **characterized in that** two extruder screws (12) are arranged within the extruder housing (11) in a converging manner towards the direction of the gear displacement pump (20), and simultaneously impinge on the gear displacement pump (20) with the respective mass flows.

17. The extruder according to claim 15 or 16, **characterized in that** one or two gear displacement pinions is/are excentrically assigned to the two extruder screws (12), said gear displacement pinions engaging with a transport crown gear.

18. The extruder according to claim 17, **characterized in that** at least one of the gear displacement pinions directly or via an intermediate gear is driven by one or both extruder screws (12) and engages or meshes with the transport crown gear.

19. The extruder according to one of the clams 1 to 18, **characterized in that** the housing (21) of the gear displacement pump (20) is incorporated into the extruder housing (11).

## Revendications

1. Extrudeuse pour masses visqueuses, en particulier pour masses fondues thermoplastiques et mélanges de caoutchoucs naturels ou synthétiques, avec une vis sans fin d'extrudeuse, à laquelle, en aval en observant dans le sens de refoulement, se raccorde une pompe volumétrique à roues dentées, avec au moins une roue de gavage et au moins une roue de refouleur, **caractérisée en ce que** l'axe (23) de la roue de gavage (22) est disposé sensiblement à angle droit par rapport à l'axe (13) de la vis sans fin d'extrudeuse (12), et l'axe (33) de la roue de refouleur (32) est disposé sensiblement dans la même direction que l'axe (13) de la vis sans fin d'extrudeuse (12).

2. Extrudeuse selon la revendication 1, **caractérisée en ce que** la roue de gavage (22) et la roue de refouleur (32) sont réalisées sous forme de roues coniques s'engrenant ensemble.

3. Extrudeuse selon la revendication 1, **caractérisée en ce que** la roue de gavage (22) ou la roue de refouleur (32) est réalisée sous la forme de roue plate, et la roue de refouleur (32) ou la roue de gavage (22) sont réalisées sous la forme de roues coniques.

4. Extrudeuse selon au moins une des revendications 1 à 3, **caractérisée en ce que** l'axe (33) de la roue de refouleur (32) est disposée à angle droit par rapport à l'axe (23) de la roue de gavage (22).

5. Extrudeuse selon au moins une des revendications 1 à 3, **caractérisée en ce que** l'axe (33) de la roue de refouleur (32) est disposée selon un angle aigu par rapport à l'axe (23) de la roue de gavage (22).

6. Extrudeuse selon au moins une des revendications 1 à 3, **caractérisée en ce que** la roue de gavage (22) et la roue de refouleur (32) sont réalisées sous forme de roues à vis.

7. Extrudeuse selon la revendication 6, **caractérisée en ce que** la roue de refouleur (32) est réalisée sous forme de vis et la roue de gavage (22) est réalisée sous forme de roue à vis.

8. Extrudeuse selon au moins une des revendications 1 à 7, **caractérisée en ce que** la roue de refouleur (32) et la vis d'extrudeuse (12) sont disposées coaxialement.

9. Extrudeuse selon au moins une des revendications 1 à 8, **caractérisée en ce que** la roue de refouleur (32) est reliée, par une liaison à interaction de forces, à la vis d'extrudeuse (12).

10. Extrudeuse selon au moins une des revendications 1 à 8, **caractérisée en ce que** la roue de refouleur (32) présente un dispositif d'entraînement indépendant de la vis sans fin d'extrudeuse (12).

11. Extrudeuse selon au moins une quelconque des revendications 1 à 10, **caractérisée en ce qu'**une roue de gavage (222) supplémentaire, s'engrenant également avec la roue de refouleur (32), est disposée sur le côté, opposé à la roue de gavage (22), de la vis sans fin d'extrudeuse (12).

12. Extrudeuse selon au moins une quelconque des revendications 1 à 10, **caractérisée en ce que** plusieurs roues de gavage (22, 222) sont disposées sur la périphérie de la vis sans fin d'extrudeuse (12).

13. Extrudeuse selon au moins une quelconque des revendications 1 à 12, **caractérisée en ce que** la vis sans fin d'extrudeuse (12) présente un prolongement (14) s'étendant en pénétrant dans la zone des roues de gavage (22, 222).

14. Extrudeuse selon la revendication 13, **caractérisée en ce que** le prolongement (14) s'étend jusqu'à la roue de refouleur (32).

15. Extrudeuse selon au moins une quelconque des revendications 1 à 14, **caractérisée en ce que** deux vis sans fin d'extrudeuse (12) sont disposées parallèlement l'une à l'autre dans le boîtier d'extrudeuse (11) et sollicitent simultanément la pompe volumétrique à roues dentées (20) avec les flux de masse respectifs.

16. Extrudeuse selon au moins une quelconque des revendications 1 à 14, **caractérisée en ce que** deux vis sans fin d'extrudeuse (12) sont disposées dans le boîtier d'extrudeuse (11), en convergeant en direction de la pompe volumétrique à roues dentées (20) et sollicitent simultanément la pompe volumétrique à roues dentées (20) avec les flux de masse respectifs.

17. Extrudeuse selon la revendication 15 ou 16, **caractérisée en ce qu'**un ou deux pignons de refouleur à roues dentées, s'engrenant avec une roue plate de gavage, sont associées, de manière excentrée, aux deux vis sans fin d'extrudeuse (12).

18. Extrudeuse selon la revendication 17, **caractérisée en ce qu'**au moins l'un des pignons du refouleur à roue dentée est entraîné directement, ou par l'intermédiaire d'une transmission intermédiaire, par une ou les deux vis sans fin d'extrudeuse (12) et s'engrène avec la roue plate de refoulement.

19. Extrudeuse selon au moins une quelconque des revendications 1 à 18, **caractérisée en ce que** le boîtier (21) de la pompe volumétrique (20) est intégré dans le boîtier d'extrudeuse (11 ).
